# FASCICULE DE BREVET EUROPEEN

(11) **EP 3 727 795 B1**
(45) Date de publication et mention de la délivrance du brevet: **26.01.2022**
(21) Numéro de dépôt: 18839688.1
(22) Date de dépôt: 11.12.2018
(51) Int. Cl.: B29C 49/48, B29C 49/06, B29C 49/28, B29C 49/36, B29K 67/00, B29L 31/00

(54) **DEMI-MOULE PRESENTANT UNE FACE D'ASSEMBLAGE CYLINDRIQUE ET PROCEDE DE REALISATION**
HALBFORM MIT ZYLINDRISCHER MONTAGEFLÄCHE UND HERSTELLUNGSVERFAHREN
HALF-MOULD HAVING A CYLINDRICAL ASSEMBLY FACE AND PRODUCTION METHOD

(30) Priorité: 22.12.2017 FR 1762929
(43) Date de publication de la demande: 28.10.2020
(73) Titulaire: Sidel Participations, 76930 Octeville-sur-Mer (FR)
(72) Inventeur: HELLOUIN, Damien, 76930 Octeville-Sur-Mer (FR); ALIX, Olivier, 76930 Octeville-Sur-Mer (FR); TOUTOUX, Alexandre, 76930 Octeville-Sur-Mer (FR); BIANCHINI, Cédric, 76930 Octeville-Sur-Mer (FR)
(74) Mandataire: Sidel Group
(86) Numéro de dépôt international: PCT/FR2018/053197
(87) Numéro de publication internationale: WO 2019/122596

(56) Documents cités:
- EP-A1- 2 111 967
- EP-B1- 2 111 967
- DE-B1- 2 720 448
- DE-C2- 2 720 448
- US-A1- 2009 028 976

## Description

L'invention concerne un demi-moule pour le formage de récipients en matériau thermoplastique d'axe d'orientation verticale, notamment par soufflage ou étirage-soufflage, le demi-moule comportant :
- une face de joint avant plane transversale verticale munie d'une demi-cavité de moulage ;
- une face d'assemblage verticale opposée.

### ARRIERE PLAN TECHNIQUE DE L'INVENTION

Il est connu de fabriquer en grandes séries des récipients, notamment des bouteilles, en matières thermoplastiques par soufflage ou étirage-soufflage de préformes. A cet effet, les préformes chaudes sont insérées dans des unités de moulage présentant une cavité de moulage de la forme du récipient à obtenir.

Pour permettre de réaliser les récipients en grandes séries, plusieurs unités de moulage sont agencées sur une roue principale formant un carrousel rotatif d'une installation de formage. Ceci permet de former successivement plusieurs récipients pendant leur déplacement entre un point d'entrée et un point de sortie.

En phase de fabrication, les préformes sont amenées à une unité de moulage de l'installation de formage à laquelle sont associés des moyens de formage par application d'au moins un fluide sous pression, gazeux et/ou liquide, dans la préforme. Le formage de la préforme est par exemple obtenu par soufflage ou étirage-soufflage au moyen d'un gaz sous pressions, tel que de l'air.

Dans une installation de formage à carrousel rotatif, chaque unité de moulage comporte au moins un ensemble de moulage équipé d'une cavité de moulage. L'ensemble de moulage est réalisé en au moins deux demi-moules portant chacun une empreinte de la moitié de la cavité de moulage. Les demi-moules sont portés par deux supports de moule associés. Les supports de moule sont mobiles entre une position ouverte, dans laquelle les deux demi-moules sont écartés pour permettre l'extraction d'un récipient moulé et l'introduction d'une préforme, et une position fermée dans laquelle les deux demi-moules occupent une position jointe pour reconstituer la cavité de moulage.

Les deux supports de moule sont montés pivotants l'une par rapport à l'autre, articulés par une charnière verticale. Une telle unité de moulage est aussi connue sous l'appellation "moule portefeuille".

Les fabricants de récipients sont souvent amenés à changer le modèle de récipients produits. C'est notamment le cas des fabricants qui produisent des récipients ou bouteilles destinés à contenir des produits d'entretien ou d'hygiène, dits "home personal care". Pour permettre ce changement de modèle, il est connu de concevoir des unités de moulage permettant de remplacer facilement et rapidement les éléments de l'ensemble de moulage comportant la cavité. les documents EP2111967 et US2009/0028976 de la demanderesse décrivent des moules adaptés au changement de modèle, le premier étant muni de coquille de de porte coquille, le segond étént variable pour former des récipients de hauteurs différentes.

Il est fréquent que certains récipients, dits récipients oblongs par la suite, produits dans ce domaine présente une section transversale de forme oblongue. En outre, certains récipients de grande dimension présentent une contenance très grande, par exemple de l'ordre de plusieurs litres. C'est par exemple le cas de certaines bouteilles destinées à contenir de la lessive.

Les unités de moulage sont donc prévues pour permettre la production de récipients oblongs de grande dimension. Pour que le carrousel puisse porter un nombre assez élevé d'unités de moulage, par exemple une dizaine, tout en demeurant assez compact, il est connu de réaliser des unités de moulage comportant des ensembles de moulage dits "elliptiques". Ces ensembles de moulage elliptique présentent, en coupe transversale longitudinale, un contour de forme ovale.

On définit une courbe fermée ovale comme étant une courbe continue qui présente en tout point une et une seule droite tangente. Une forme ovale telle que définie dans cette demande présente deux axes de symétrie orthogonaux. Par la suite, on appellera grand diamètre D1, le segment qui s'étend dans le sens de la longueur de l'ovale le long du premier axe de symétrie, et petit diamètre D2, le segment qui s'étend dans le sens le plus étroit de l'ovale le long du deuxième axe de symétrie. Une ellipse est donc un ovale particulier selon la présente définition.

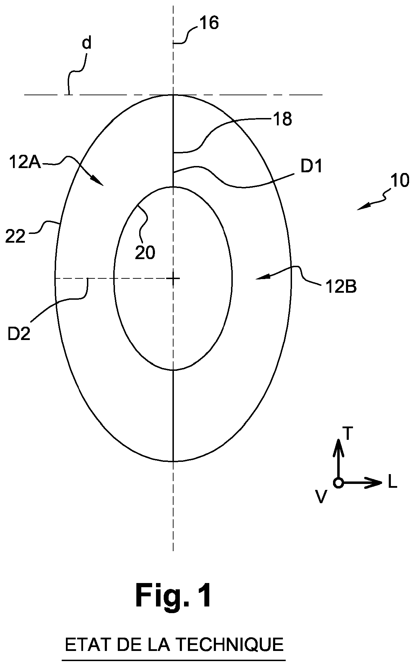

On a représenté à la figure 1 un tel ensemble de moulage elliptique réalisé selon l'état de la technique.

L'ensemble 10 de moulage présente deux demi-moules 12A, 12B monoblocs qui sont chacun porté par un support de moule associé (non représenté). Les deux demi-moules 12A, 12B étant identiques par symétrie par rapport à un plan 16 de joint, on ne décrira que le demi-moule 12A de gauche, la description étant applicable au demi-moule 12B de droite par symétrie.

Ainsi, le demi-moule 12A est délimité longitudinalement vers l'avant par une face 18 de joint avant plane transversale verticale qui est munie d'une demi-cavité 20 de moulage. La face 18 de joint s'étend dans le plan 16 de joint. Dans une position jointe, les deux demi-moules 12A, 12B sont destinés à être joints en plaquant leurs faces 18 de joint respectives longitudinalement l'une contre l'autre pour reconstituer la cavité 20 de moulage, comme représenté à la figure 1.

Le demi-moule 12A est aussi délimité longitudinalement vers l'arrière par une face 22 d'assemblage verticale opposée. La face 22 d'assemblage présente, en coupe transversale longitudinale, une forme courbée de manière convexe. La face 22 d'assemblage est destinée à être logée dans une face de réception complémentaire d'un support de moule associé (non représenté). La face 22 d'assemblage présente généralement une forme cylindrique formée par la translation d'une droite génératrice verticale sur la courbe directrice, formée par la forme courbée de la face 22 d'assemblage en coupe transversale longitudinale représentée à la figure 1.

De manière connue, la face 22 d'assemblage présente, en coupe transversale longitudinale, la forme d'un demi-ovale. En position jointe, les faces 22 d'assemblage des deux demi-moules 12A, 12B forment donc un ovale complet. Le grand diamètre D1 s'étend ici dans le plan 16 de joint. En d'autres termes, dans un plan longitudinal transversal coupant le demi-moule 12A, chaque extrémité transversale de la face 22 d'assemblage présente une droite "d" tangente qui s'étend perpendiculairement au plan 16 de joint. En outre, le demi-rayon, formant la moitié du petit diamètre D2, qui s'étend longitudinalement entre la face 22 d'assemblage jusqu'à la face 18 de joint du demi-moule 12A présente une longueur inférieure à la moitié de la longueur du grand diamètre D1 qui s'étend entre les deux extrémités transversales de la face 22 d'assemblage.

Un tel ensemble 10 de moulage réalisé selon l'état de la technique permet avantageusement de réaliser des récipients oblongs de grande dimension en diminuant l'encombrement longitudinal des ensembles de moulage par rapport à des ensembles de moulage présentant, en section, un contour circulaire.

Cependant, la face 22 d'assemblage des demi-moules 12A, 12B est complexe à réaliser. En effet, chaque demi-moule 12A, 12B est généralement obtenu par moulage. La face d'assemblage présente alors l'aspect rugueux des surfaces dites brutes de fonderie. Il est donc nécessaire d'usiner la face 22 d'assemblage pour la rendre fonctionnelle. L'usinage d'une surface présentant un profil demi-ovale est réalisé par fraisage. Un tel procédé est long et coûteux, notamment du fait des dimensions du demi-moule.

En outre, la même opération de fraisage doit être utilisée pour réaliser les faces de réception du support de moule. Du fait du rayon de courbure variable de la face de réception, la frise utilisée doit présenter un diamètre inférieur au rayon de courbure le plus petit de la face de réception. L'utilisation d'une fraise de petite taille pour l'usinage de cette face de réception augmente la durée, et donc le coût, de fabrication du support de moule.

### BREF RESUME DE L'INVENTION

L'invention propose un demi-moule pour le formage de récipients en matériau thermoplastique d'axe d'orientation verticale, notamment par soufflage ou étirage-soufflage, le demi-moule comportant :
- une face de joint avant plane transversale verticale munie d'une demi-cavité de moulage ;
- une face d'assemblage verticale opposée, selon la direction longitudinale, à la face de joint et courbée de manière convexe, la face d'assemblage étant destinée à être logée dans une face de réception complémentaire d'un support de moule associé ;
caractérisé en ce qu'en coupe transversale longitudinale, la face d'assemblage présente une forme d'arc de cercle centré sur un axe de référence, ledit axe de référence étant décalé longitudinalement vers l'avant par rapport à la face de joint.

Selon d'autres caractéristiques du demi-moule réalisé selon les enseignements de l'invention :
- la face d'assemblage comporte plusieurs tronçons verticaux présentant la forme d'un secteur de cylindre centré sur l'axe de référence ;
- la face d'assemblage présente, en coupe transversale longitudinale une corde transversale s'étendant dans le plan de la face de joint en reliant les extrémités transversales libres de la face d'assemblage ; et une bissectrice longitudinale passant par le centre de la corde et de longueur inférieure à la moitié de celle de la corde, un axe vertical central du demi-moule passant par le croisement entre la corde et la bissectrice ; l'axe de référence étant agencé dans un plan comportant la bissectrice ;
- les axes de références de chaque tronçon de face d'assemblage sont coaxiaux entre eux ;
- au moins deux tronçons de face d'assemblage présentent des rayons de courbure différents ;
- le demi-moule est monobloc ;
- le demi-moule est réalisé en deux parties :
   -- une coquille interne qui est délimitée longitudinalement une face avant formant la face de joint du demi-moule et par une face arrière, opposée à la face de joint, et formant une face de montage de forme convexe ;
   -- un porte-coquille externe qui est délimité longitudinalement par une face de réception avant de forme complémentaire à celle de la face de montage et dans laquelle la face de montage de la coquille est logée et par une face arrière opposée qui forme la face d'assemblage du demi-moule ;
- en coupe transversale longitudinale, la face de montage de la coquille présente une forme d'arc de cercle centré sur un axe de référence ;
- l'axe de référence de la face de montage est coaxial à l'axe central inclus dans le plan de la face de joint ;
- l'axe de référence de la face de montage est décalé longitudinalement vers l'avant par rapport à la face de joint ;
- la face de montage de la coquille comporte plusieurs tronçons verticaux présentant la forme d'un secteur de cylindre centré sur l'axe de référence de la face de montage ;
- l'axe de référence est agencé dans un plan comportant la bissectrice longitudinale ;
- les axes de références de chaque tronçon de face de montage sont coaxiaux entre eux ;
- au moins deux tronçons de face de montage présentent des rayons de courbure différents ;
- les axes de référence des tronçons de face de montage et les axes de référence des tronçons de face d'assemblage sont tous coaxiaux à un axe commun ;

L'invention concerne aussi un ensemble de moulage comportant une paire de demi-moules réalisés selon les enseignements de l'invention, caractérisé en ce que les deux demi-moule de la paire comportent deux demi-cavités complémentaires pour former une cavité conforme au récipient final à obtenir lorsque les deux demi-moules occupent une position jointe dans laquelle leur deux faces de joint sont plaquées longitudinalement l'une contre l'autre ;
Selon une autre caractéristique de l'ensemble de moulage réalisé selon les enseignements de l'invention, les deux demi-moules présentent une structure sensiblement identique par symétrie par rapport à un plan de joint passant par les faces de joint en position jointe des deux demi-moules ;

L'invention concerne aussi une unité de moulage comportant deux supports de moule dont chacun est destiné à recevoir l'un des demi-moules d'un ensemble de moulage réalisé selon les enseignements de l'invention, les supports de moule étant montés mobiles l'un par rapport à l'autre entre une position ouverte, dans laquelle les faces de joint des demi-moule sont écartés, et une position fermée dans laquelle les demi-moules occupent leur position jointe, caractérisé en ce que chaque support de moule comporte une face de réception de forme complémentaire de la face d'assemblage du demi-moule associé.

Selon une autre caractéristique de l'unité de moulage selon les enseignements de l'invention, les deux supports de moule sont montés pivotant l'un par rapport à l'autre autour d'un axe de charnière vertical, le plan de joint des demi-moules passant par l'axe de charnière.

L'invention concerne aussi une installation de formage de récipient thermoplastique par formage, et notamment par soufflage ou étirage soufflage, comportant une roue principale montée tournante autour d'un axe central de rotation et comportant à sa périphérie une pluralité d'unité de moulage réalisées selon les enseignements de l'invention, caractérisé en ce que le plan de joint des demi-moules de chaque unité de moulage passe par l'axe central de rotation de la roue principale.

L'invention concerne aussi un procédé d'usinage des faces externes d'une paire d'éléments de moulage d'un ensemble de moulage réalisé selon les enseignements de l'invention, parmi les faces de montage des coquilles ou les faces d'assemblage des porte-coquilles ou les faces d'assemblage des demi-moules monobloc, les éléments de moulage étant obtenus par fonderie, caractérisé en ce que les éléments de moulage de la paire sont montés sur une entretoise d'usinage montée à rotation sur un tour d'usinage autour d'un axe d'usinage, de manière que les axes de référence des tronçons à usiner soit en coïncidence avec l'axe d'usinage.

L'invention concerne en outre un procédé d'usinage de la face de réception d'un support de moule réalisé selon les enseignements de l'invention, ou de la face de réception interne d'un porte-coquille réalisé selon les enseignements de l'invention, caractérisé en ce que chaque tronçon de ladite face interne est usinée au moyen d'un outil de coupe tournant autour d'un axe d'usinage qui est en coïncidence avec l'axe de référence dudit tronçon, l'outil de coupe présentant un rayon qui est égal au rayon de courbure dudit tronçon.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en coupe transversale longitudinale qui représente un ensemble de moulage elliptique réalisé selon l'état de la technique ;
- la figure 2 est une vue de dessus qui représente une unité de moulage comportant un ensemble de moulage réalisé selon un premier mode de réalisation de l'invention, les demi-moules de l'ensemble de moulage étant en position jointe ;
- la figure 3 est une vue similaire à celle de la figure 2 dans laquelle les supports de moule sont en position ouverte tandis que les demi-moules sont démontés des supports de moule et ils occupent leur position jointe ;
- la figure 4 est une vue en perspective qui représente deux demi-moules d'un ensemble de moulage réalisés selon un premier mode de réalisation de l'invention ;
- la figure 5 est une vue en coupe transversale longitudinale selon le plan de coupe 5-5 de la figure 4 qui représente un demi-moule réalisé selon les enseignements de l'invention ;
- la figure 6 est une vue en coupe verticale longitudinale selon le plan de coupe 6-6 de la figure 4 qui représente un demi-moule réalisé selon les enseignements de l'invention ;
- la figure 7 est une vue similaire à celle de la figure 6 qui représente une variante de réalisation du demi-moule ;
- la figure 8 est une vue de dessus qui représente une installation de formage qui est équipée de plusieurs unité de moulage identiques à celles de la figure 2 ;
- la figure 9 est une vue en coupe longitudinale transversale selon le plan de coupe 9-9 de la figure 10 qui représente les demi-moules de la figure 4 montés dans un tour d'usinage par l'intermédiaire d'une entretoise d'usinage pour permettre l'usinage de leur face d'assemblage par tournage ;
- la figure 10 est une vue en coupe axiale selon la plan de coupe 10-10 de la figure 9 ;
- la figure 11 est une vue en coupe transversale longitudinale qui représente un support de moule réalisé selon les enseignements de l'invention dont la face de réception est en cours d'usinage ;
- la figure 12 est une vue en perspective qui représente un demi-moule réalisé en deux parties selon un deuxième mode de réalisation de l'invention ;
- la figure 13 est une vue en coupe transversale longitudinale qui représente le demi-moule de la figure 12 lorsque les deux parties sont assemblées ;
- la figure 14 est une vue similaire à celle de la figure 13 qui représente une variante de réalisation du deuxième mode de réalisation de l'invention.

### DESCRIPTION DETAILLEE DES FIGURES

Dans la description et dans les revendications, des éléments présentant une structure identique ou des fonctions analogues seront désignés par une même référence.

Dans la description et dans les revendications, on adoptera à titre non limitatif un repère orthogonal associé à chaque demi-moule et présentant des orientations :
- longitudinale "L" dirigée d'arrière en avant en direction de l'autre demi-moule en position jointe ;
- transversale "T" dirigée de gauche à droite ;
- verticale "V" dirigée de bas en haut, la direction verticale étant indépendante de la direction de la gravité.

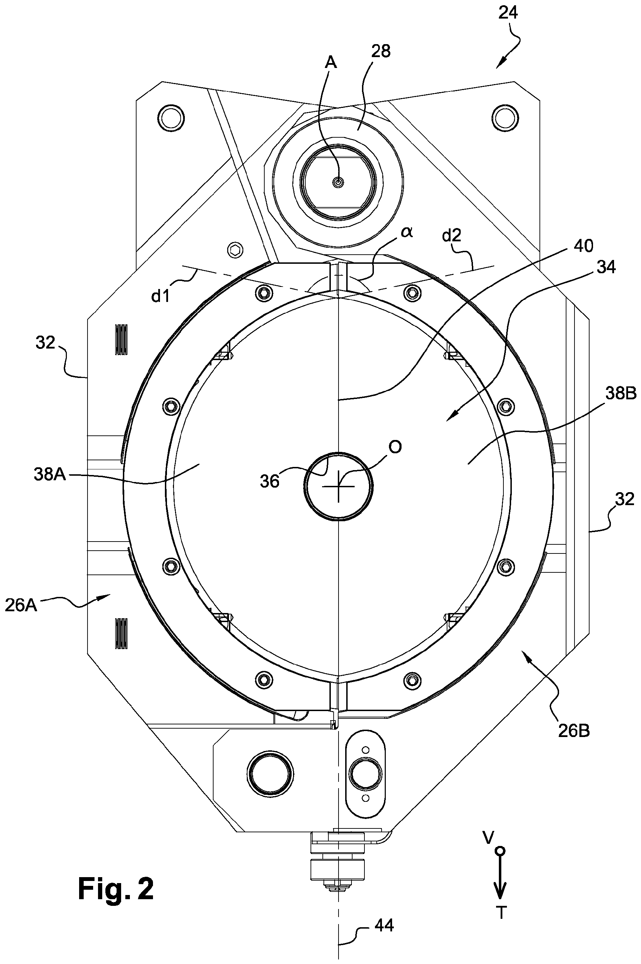

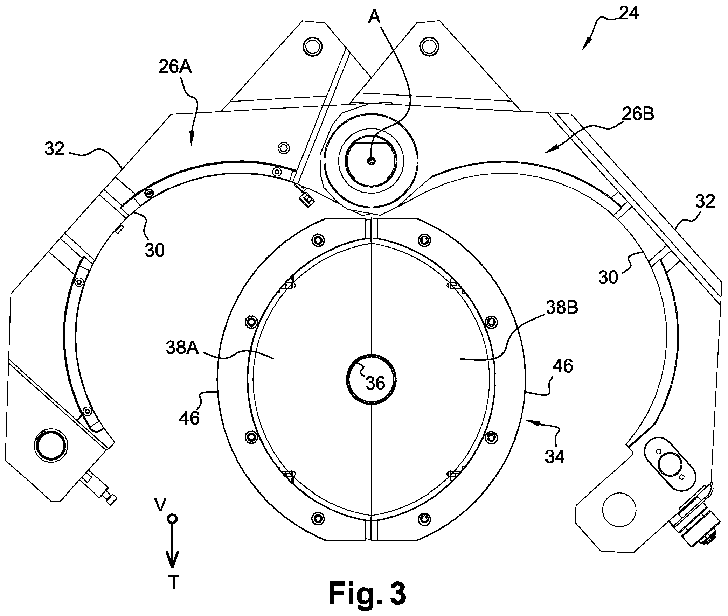

On a représenté aux figures 2 et 3 une unité 24 de moulage pour la fabrication de récipients en matériau thermoplastique, notamment en polyéthylène téréphtalate (PET) ou en polypropylène (PP), d'axe d'orientation verticale par soufflage d'une préforme (non représentée).

L'unité 24 de moulage comporte deux supports 26A, 26B de moule qui sont montés mobiles entre une position fermée, représentée à la figure 2, et une position ouverte, représentée à la figure 3. Dans l'exemple illustré aux figures, les deux supports 26A, 26B de moule sont montés pivotant l'un par rapport à l'autre autour d'un axe "A" vertical de charnière 28 agencé le long d'un bord d'extrémité transversale des supports 26A, 26B de moule. Un tel agencement est généralement appelé "moule portefeuille".

Quoique l'invention soit particulièrement avantageuse avec un moule portefeuille, elle est aussi applicable à des supports de moule mobiles en translation l'un par rapport à l'autre.

Chaque support 26A, 26B de moule est délimité longitudinalement par une face 30 de réception avant verticale et par une face 32 arrière verticale, comme cela est par exemple visible à la figure 3. La face 30 de réception de chaque support 26A, 26B de moule est tournée vers l'autre support 26A, 26B de moule lorsqu'ils occupent leur position fermée.

L'unité 24 de moulage comporte aussi un ensemble 34 de moulage qui présente une cavité de moulage présentant la forme du récipient à obtenir par soufflage. La cavité est débouchante verticalement vers le haut par un orifice 36 destiné à recevoir un récipient.

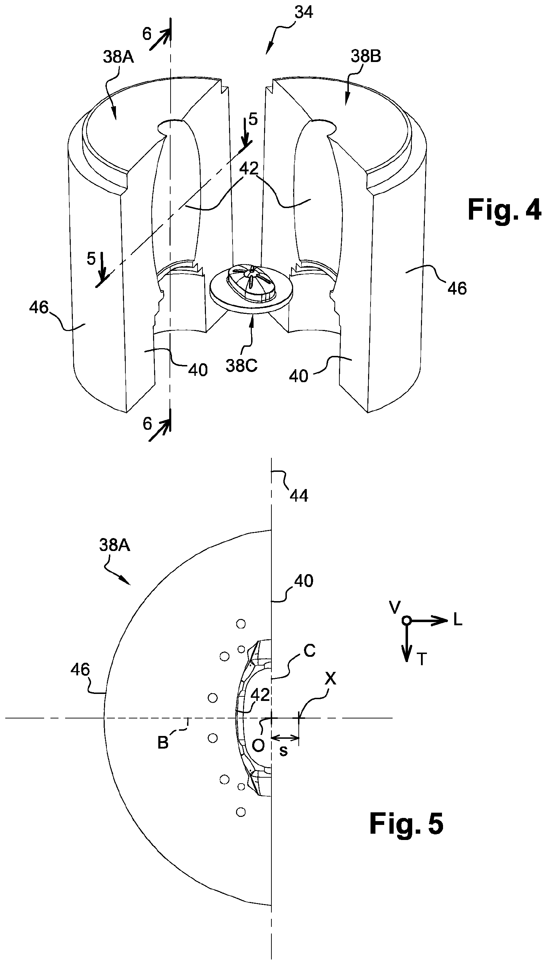

L'ensemble 34 de moulage comporte au moins une paire de demi-moules 38A, 38B complémentaires. Comme cela est particulièrement visible à la figure 4, chaque demi-moule 38A, 38B présente une face 40 de joint avant verticale transversale dans laquelle est formée une demi-cavité 42 de moulage. Lorsque les deux demi-moules 38A, 38B occupent une position jointe, comme illustré à la figure 2, les deux demi-moules 38A, 38B sont plaqués l'un contre l'autre par leur face 40 de joint respective pour que leurs demi-cavités 42 reconstituent la cavité de moulage. Les faces 40 de joint s'étendent alors dans un plan 44 de joint vertical transversal.

Dans le mode de réalisation représenté à la figure 4, l'ensemble 34 de moulage comporte en plus un fond 38C distinct des demi-moules 38A, 38B. Ainsi, chaque demi-moule 38A, 38B est propre à former le corps du récipient, tandis que le fond 38C est propre à former le fond du récipient.

En variante non représentée, l'ensemble de moulage comporte uniquement deux demi-moule. L'empreinte de chaque demi-moule est alors propre à former le corps et le fond du récipient.

En se reportant à nouveau à la figure 4, chaque demi-moule 38A, 38B présente aussi une face 46 d'assemblage arrière verticale opposée à la face 40 de joint. La face 46 d'assemblage présente ici une forme d'un secteur de cylindre dont la directrice et la génératrice seront définies plus en détails par la suite.

Chaque demi-moule 38A, 38B est monté dans un support 26A, 26B de moule associé en positionnant sa face 46 d'assemblage contre la face 30 de réception associée du support 26A, 26B de moule comme représenté à la figure 2. A cet effet, la face 30 de réception présente une forme complémentaire de celle de la face 46 d'assemblage du demi-moule 38A, 38B associé. Chaque demi-moule 38A, 38B est assemblé avec son support 26A, 26B de moule associé par tout moyen d'assemblage déjà connu dans le domaine des unités de moulage avec cavité de moulage interchangeable.

En position fermée des supports 26A, 26B de moule, les demi-moules 38A, 38B occupent leur position jointe, tandis qu'en position ouverte, les faces 40 de joint des demi-moules 38A, 38B sont écartées l'une de l'autre.

A l'opposé de la charnière 28, les supports 26A, 26B de moule sont munis d'un mécanisme de verrouillage en position fermée.

Les deux demi-moules 38A, 38B sont sensiblement identiques par symétrie par rapport au plan 44 de joint. Le terme "sensiblement" signifie que les deux demi-moules 38A, 38B peuvent se différencier par certains détails mineurs, telle que la présence d'orifices ou de gorges dans la face 46 d'assemblage de l'un des deux demi-moules qui serait absents sur l'autre. Ceci est notamment le cas lorsque l'un des demi-moules est monté flottant sur son support de moule avec interposition d'une chambre de compensation tandis que l'autre demi-moule est monté fixe sur son support de moule. Néanmoins, ces légères différences de structures sont destinées à être réalisées en aval de l'opération d'usinage des faces 46 d'assemblage qui sera décrite plus en détails dans la suite de la description.

Pour cette raison, on décrira par la suite seulement l'un des deux demi-moules, ici le demi-moule 38A représenté à gauche sur la figure 2, la description étant applicable par symétrie à l'autre demi-moule 38B.

Selon les enseignements de l'invention, la face 46 d'assemblage du demi-moule 38A présente, en coupe transversale longitudinale, une forme d'arc de cercle centré sur un axe "X" de référence, ledit axe "X" de référence étant décalé longitudinalement vers l'avant par rapport à la face 40 de joint d'une distance "s".

Ainsi, comme représenté en traits interrompus à la figure 5, la face 46 d'assemblage présentant, en coupe transversale longitudinale :
- une corde "C" transversale qui est un segment virtuel qui s'étend dans le plan 44 de joint reliant et qui relie les extrémités transversales libres de la face 46 d'assemblage ; et
- une bissectrice "B" longitudinale qui est un segment virtuel s'étendant depuis le centre de la corde "C" jusqu'à la face 46 d'assemblage.

La bissectrice "B" forme le seul axe longitudinal de symétrie pour la face 46 d'assemblage du demi-moule 38A en coupe comme représentée à la figure 5.

Du fait du décalage de l'axe "X" de référence par rapport à la face 40 de joint, la longueur de la bissectrice "B" est inférieure à la moitié de la longueur de la corde "C".

On appelle en outre axe "O" vertical central du demi-moule 38A, l'axe "O" passant par le croisement entre la corde "C" et la bissectrice "B" pour les coupes transversales verticales du demi-moule 38A réalisées à des hauteurs différentes.

L'axe "X" de référence est de préférence agencé dans un plan comportant la bissectrice "B".

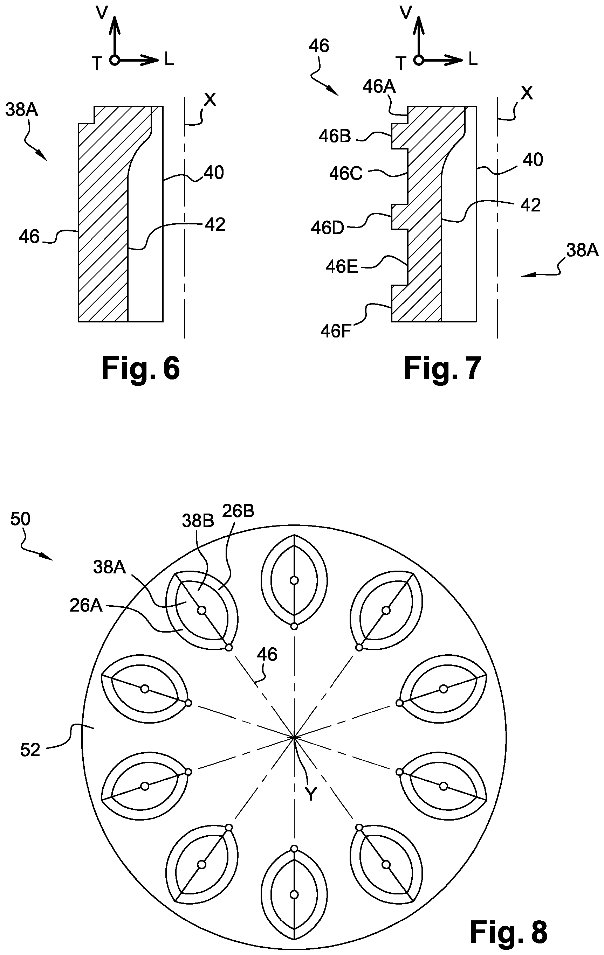

Comme cela est représenté à la figure 6, la face 46 d'assemblage peut présenter globalement une forme de secteur de cylindre de révolution centré sur l'axe "X". Dans ce cas, les coupes transversales verticales de la face 46 d'assemblage sont sensiblement identiques en forme et en dimensions quelle que soit la hauteur à laquelle elles sont prises. Dans l'exemple représenté à la figure 6, il s'agit du secteur d'un cylindre de révolution. Dans ce cas, le demi-moule 38A comporte un unique axe "X" de référence commun à toutes les coupes.

Dans la variante de réalisation représentée à la figure 7, la face 46 d'assemblage comporte plusieurs tronçons 46A à 46F verticaux, ici au nombre de six, présentant la forme d'un secteur de cylindre centré sur l'axe "X" de référence. Dans ce cas, les coupes transversales verticales de la face 46 d'assemblage sont sensiblement identiques en forme, mais elles peuvent différer en dimensions selon la hauteur à laquelle elles sont prises. Dans l'exemple représenté à la figure 7 chaque tronçon 46A à 46F forme un secteur de cylindre de révolution.

De préférence, les axes "X" de références de chaque tronçon 46A à 46F de face 46 d'assemblage sont coaxiaux entre eux. Ainsi, comme représenté à la figure 7, le demi-moule 38A comporte un unique axe "X" de référence commun à toutes les coupes. De ce fait, au moins deux tronçons 46A, 46B de face 46 d'assemblage présentent des rayons de courbure différents.

Selon une variante non représentée de l'invention, lorsque la face d'assemblage comporte plusieurs tronçons verticaux, au moins deux tronçons verticaux présentent chacun des axes de référence non coaxiaux.

En variante non représentée de l'invention, on comprendra qu'un tronçon vertical ou la totalité de la face d'assemblage peut présenter la forme d'un secteur angulaire d'un volume axisymétrique quelconque centré sur l'axe "X" de référence, tel qu'un tronc de cône.

On a représenté à la figure 8 une installation 50 de formage de récipient thermoplastique par formage, et notamment par soufflage ou étirage soufflage, comportant une roue 52 principale montée tournante autour d'un axe "Y" de rotation central vertical. La roue 52 principale comporte, à sa périphérie, une pluralité d'unités 24 de moulage, ici au nombre de dix, chacune réalisée comme cela a été décrit précédemment. Chaque unité 24 de moulage est agencée de façon à ce que le plan 44 de joint de ses demi-moules 38A, 38B, en position fermée des supports 26A, 26B de moule, passe par l'axe "Y" de rotation de la roue 52 principale. La charnière 28 est tournée vers l'axe "Y" de rotation de manière que les moules 38A, 38B s'ouvrent radialement vers l'extérieur de la roue 52 principale.

Comme cela sera expliqué par la suite, le fait de réaliser un demi-moule 38A, 38B présentant une telle face 46 d'assemblage permet très avantageusement de conserver les avantages d'un moule elliptique, c'est-à-dire de présenter un encombrement longitudinal réduit, tout en étant très rapide et peu onéreux à fabriquer. Ceci permet ainsi de positionner un grand nombre d'unités 24 de moulage sur la périphérie de la roue 52 principale sans que ces dernières ne se touchent lors de leur ouverture. En effet, contrairement au moules elliptiques existant, chaque tronçon de face 46 d'assemblage présente un unique rayon de courbure en coupe longitudinale transversale, tandis que les moules elliptiques de l'état de la technique présentent un rayon de courbure évolutif en coupe longitudinale transversale.

Contrairement aux moules elliptiques de l'état de la technique, les droites "d1" et "d2" tangentes à l'extrémité transversale de la face 46 d'assemblage de chaque demi-moule 38A, 38B ne sont pas d'orientation longitudinale. Ainsi, comme représenté à la figure 2, en position jointe des demi-moules 38A, 38B, lesdites droites "d1, d2" tangentes forment un angle "a" différent de 180°.

Selon un premier mode de réalisation de l'invention représenté aux figures 2 à 5, chaque demi-moule 38A, 38B est monobloc, c'est-à-dire qu'il est réalisé en une seule pièce.

Pour fabriquer un ensemble 34 de moulage selon ce premier mode de réalisation de l'invention, chaque demi-moule 38A, 38B brut est préalablement obtenu par fonderie. Chaque demi-moule 38A, 38B brut ainsi obtenu présente des faces présentant un état de surface rugueux typique des éléments obtenus par cette technique de fabrication. Bien que chaque demi-moule 38A, 38B brut présente une forme très proche de la forme finale, il est prévu une légère surépaisseur par rapport aux demi-moules 38A, 38B finaux afin de pouvoir obtenir un état de surface fonctionnel par usinage consistant à enlever une faible épaisseur de matière sur chacune des faces du demi-moule 38A, 38B brut.

Par la suite, on s'intéresse uniquement à l'usinage de la face 46 d'assemblage de chaque demi-moule 38A, 38B. De manière non limitative, l'usinage de la face 40 de joint intervient ici chronologiquement avant l'usinage de la face 46 d'assemblage.

Avantageusement, les faces 46 d'assemblage de deux demi-moules 38A, 38B sont usinées simultanément sur une même machine-outil.

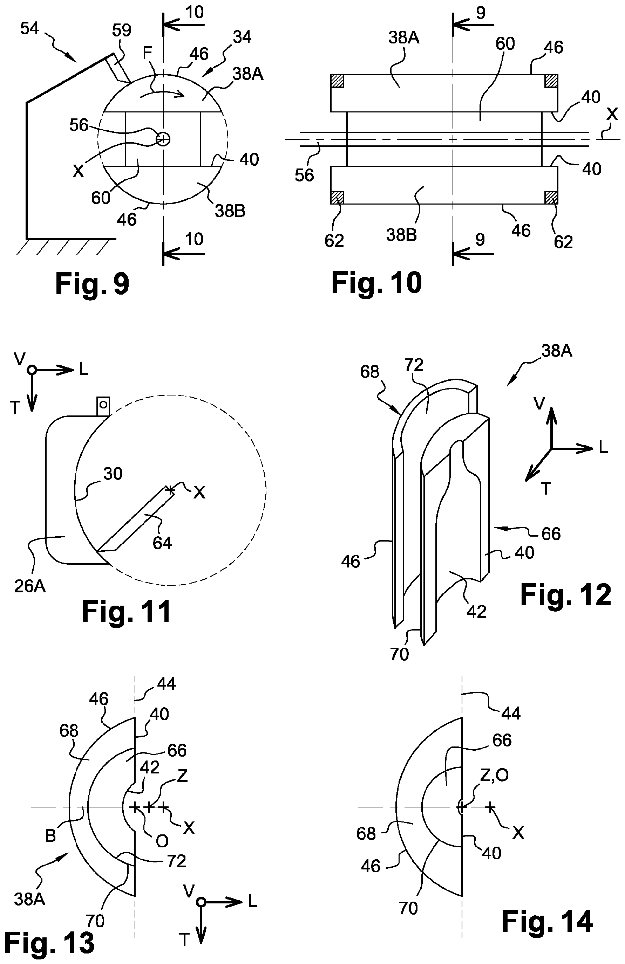

Les faces 46 d'assemblage sont obtenues par tournage. Comme représenté à la figure 9, à cet effet, la machine-outil utilisée est un tour 54 d'usinage qui comporte un arbre 56 qui est monté rotatif autour d'un axe d'usinage sur une base 58. Le tour 54 comporte aussi un outil 59 de coupe qui est destiné à enlever des copeaux de la face 46 d'assemblage brute pour obtenir la face 46 d'assemblage finale. L'outil 59 de coupe est par exemple formé de plaquettes. L'outil 59 de coupe est monté mobile radialement par rapport à l'arbre 56 rotatif.

Les demi-moules 38A, 38B de la paire sont agencés avec leurs faces 40 de joint en vis-à-vis, comme en position jointe, avec interposition d'une entretoise 60 d'usinage longitudinalement entre les deux faces 40 de joint pour maintenir les deux demi-moules 38A, 38B écartés l'un de l'autre. L'entretoise 60 présente des dimensions adaptées pour que les faces 46 d'assemblage finales correspondantes des demi-moules 38A, 38B soient agencées sur un même périmètre. Plus particulièrement, les axes "X" de référence des deux demi-moules 38A, 38B sont en coïncidence l'un avec l'autre. L'entretoise présente ainsi une épaisseur longitudinale qui est égale à deux fois la distance "s" de décalage de l'axe "X" de référence par rapport à la face 40 de joint.

Les deux demi-moules 38A, 38B sont par exemple fixés sur l'entretoise 60, par exemple au moyens de colliers 62 de serrage qui sont agencés aux extrémités verticales de chaque demi-moules 38A, 38B comme cela est représenté à la figure 10. L'ensemble des deux demi-moules 38A, 38B et de l'entretoise 60 est ensuite monté sur l'arbre 56 du tour 54 de manière que les axes "X" de référence des faces 46 d'assemblage des deux demi-moules 38A, 38B soient en coïncidence avec l'axe d'usinage de l'arbre 56.

Lorsque la face d'assemblage comporte plusieurs tronçons 46A à 46F verticaux de dimensions différentes mais de même axe "X" de référence, les tronçons verticaux des demi-moules 38A, 38B seront bien entendu placés en coïncidence les uns avec les autres.

Lorsque les faces d'assemblage des demi-moules comportent des tronçons verticaux centrés sur des axes de référence distincts, les opérations d'usinage seront réalisées en plusieurs étapes avec utilisation d'entretoise de tailles différentes pour faire correspondre successivement les différents axe de référence avec l'axe d'usinage.

En se reportant à nouveau à la figure 9, lors du procédé d'usinage, les demi-moules 38A, 38B sont entraînés en rotation autour de leur axe "X" de référence coïncidents, comme indiqué par la flèche "F". L'outil 59 de coupe est déplacé radialement à la position souhaitée pour enlever la matière sur les faces 46 d'assemblage des deux demi-moules 38A, 38B lors de leur rotation. Les demi-moules 38A, 38B sont ainsi déplacés le long de leur axe "X" de référence par rapport à l'outil 59 de coupe pour usiner la totalité de la face 46 d'assemblage des deux demi-moules 38A, 38B en une seule opération.

L'opération l'usinage est particulièrement rapide et peu onéreuse comparée à une opération de fraisage.

En variante non représentée de l'invention, on pourra bien entendu utiliser ce procédé pour réaliser un seul demi-moule en ne fixant qu'un seul demi-moule sur l'entretoise d'usinage. Dans ce cas, il est préférable de prévoir des masselottes sur le côté opposé de l'entretoise afin d'équilibrer les masses lors de la rotation de l'arbre du tour d'usinage.

On a représenté à la figure 11 le procédé d'usinage de la face 30 de réception interne d'un support 26A de moule réalisé selon les enseignements de l'invention. Tout comme les demi-moules 38A, 38B, chaque support 26A, 26B de moule est réalisé par fonderie, et sa face 30 de réception finale est obtenue par usinage de la face de réception brute.

Comme cela a déjà été expliqué, la face 30 de réception présente une forme complémentaire de celle de la face 46 d'assemblage du demi-moule 38A, 38B associé. A cet égard, la face 30 de réception présente, en coupe transversale longitudinale, une forme d'arc de cercle centré sur un axe "X" de référence.

La face 30 de réception étant concave, chaque tronçon de ladite face 30 de réception est usiné au moyen d'un outil 64 de coupe tournant autour d'un axe d'usinage qui est en coïncidence avec l'axe "X" de référence dudit tronçon. L'outil 64 de coupe présente un rayon qui est égal au rayon de courbure dudit tronçon.

Selon un deuxième mode de réalisation de l'invention qui est représenté aux figures 12 à 14, chaque demi-moule 38A, 38B est réalisé en deux parties distinctes formées par une coquille 66 et par un porte-coquille 68.

La coquille 66 interne est délimitée longitudinalement par une face verticale transversale avant formant la face 40 de joint du demi-moule 38A et par une face arrière, opposée à la face 40 de joint, formant une face 70 de montage. En coupe transversale longitudinale, la face 70 de montage présente une forme convexe.

Le porte-coquille 68 externe est délimité longitudinalement par une face 72 de réception avant de forme complémentaire à celle de la face 70 de montage. La coquille 66 est destinée à être logée dans le porte-coquille 68, sa face 70 de montage étant plaquée contre la face 72 de réception du porte-coquille 68. Le porte-coquille 68 est aussi délimité vers l'arrière par une face arrière opposée qui forme la face 46 d'assemblage du demi-moule 38A.

Ainsi, la coquille 66 porte la demi-cavité 42 de moulage. Généralement, le porte-coquille 68 est équipé de moyens de refroidissement (non représentés) de la coquille 66.

De manière générale, en coupe transversale longitudinale, la face 70 de montage de la coquille 66 présente une forme d'arc de cercle centré sur un axe de référence "Z" vertical, qui ne coïncide pas nécessairement avec l'axe "X" de référence de la face 46 d'assemblage.

Selon une première variante de réalisation du deuxième mode de réalisation qui est représentée à la figure 14, l'axe "Z" de référence de la face 70 de montage est coaxial à l'axe "O" central inclus dans le plan 44 de joint. Ainsi, la face 70 de montage présente, en coupe transversale longitudinale, la forme d'un demi-cercle.

Selon une deuxième variante de réalisation du deuxième mode de réalisation qui est représentée à la figure 13, l'axe "Z" de référence de la face 70 de montage est décalé longitudinalement vers l'avant par rapport à la face 40 de joint.

L'axe "Z" de référence de la face 70 de montage est de préférence agencé dans un plan comportant la bissectrice "B".

Tout comme la face 46 d'assemblage qui est représentée à la figure 6, la face 70 de montage peut aussi présenter globalement une forme de secteur de cylindre de révolution centré sur l'axe "Z". Dans ce cas, les coupes transversales verticales de la face 70 de montage sont sensiblement identiques en forme et en dimensions quelle que soit la hauteur à laquelle elles sont prises. Il peut ainsi s'agir d'un secteur de cylindre de révolution. Dans ce cas, la face 70 de montage comporte un unique axe "Z" de référence commun à toutes les coupes.

Selon une variante non représentée de l'invention, l'axe "Z" de référence de la face 70 de montage et l'axes "X" de référence de la face 46 d'assemblage sont coaxiaux.

En variante, tout comme la face 46 d'assemblage qui est représentée à la figure 7, la face 70 de montage peut aussi comporter plusieurs tronçons verticaux présentant la forme d'un secteur de cylindre centré sur l'axe "Z" de référence. Dans ce cas, les coupes transversales verticales de la face 70 de montage sont sensiblement identiques en forme, mais elles peuvent différer en dimensions selon la hauteur à laquelle elles sont prises. Ainsi, au moins deux tronçons de face de montage présentent des rayons de courbure différents.

De préférence, les axes "Z" de référence de chaque tronçon de face 70 de montage sont coaxiaux entre eux. Ainsi, la face 70 de montage comporte un unique axe "Z" de référence commun à toutes les coupes.

Selon une variante non représentée de l'invention, lorsque la face de montage comporte plusieurs tronçons verticaux, au moins deux tronçons verticaux présentent chacun des axes de référence non coaxiaux.

En variante non représentée de l'invention, on comprendra qu'un tronçon vertical ou la totalité de la face de montage peut présenter la forme d'un secteur angulaire d'un volume axisymétrique quelconque centré sur l'axe "Z" de référence, tel qu'un tronc de cône.

Pour fabriquer une coquille 66 ou un porte-coquille 68, le procédé est le même que pour la fabrication d'un demi-moule 38A monobloc réalisé selon le premier mode de réalisation de l'invention.

Ainsi, chaque coquille 66 ou porte-coquille 68 brut est préalablement obtenu par fonderie. Chaque coquille 66 ou porte-coquille 68 brut ainsi obtenu présente des faces présentant un état de surface rugueux typique des éléments obtenus par cette technique de fabrication. Bien que chaque coquille 66 ou porte-coquille 68 brut présente une forme très proche de la forme finale, il est prévu une légère surépaisseur par rapport aux coquilles 66 ou porte-coquilles 68 finaux afin de pouvoir obtenir un état de surface fonctionnel par usinage consistant à enlever une faible épaisseur de matière sur chacune des faces de la coquille 66 ou du porte-coquille 68 brut.

L'usinage de la face 70 de montage de la coquille 66 et l'usinage de la face 46 d'assemblage du porte-coquille 68 sont réalisés selon un procédé identique à celui qui a été décrit pour la réalisation de la face 46 d'assemblage d'un demi-moule 38A monobloc. A cet égard, on se reportera la description qui en a été effectuée en référence aux figures 9 et 10, en remplaçant l'élément monobloc "demi-moule 38A" par l'élément "coquille 66" ou par l'élément "porte-coquille 68".

De même, l'usinage de la face 72 de réception du porte-coquille 68 est réalisé de manière identique à ce qui a été décrit dans le premier mode de réalisation pour l'usinage de la face 30 de réception du support 26A de moule en référence à la figure 11. A cet égard, on se reportera à la description qui en a été effectuée en référence à la figure 11, en remplaçant l'élément "support 26A de moule" par l'élément "porte-coquille 68".

## Revendications

1. Demi-moule (38A, 38B) pour le formage de récipients en matériau thermoplastique d'axe d'orientation verticale, notamment par soufflage ou étirage-soufflage, le demi-moule (38A, 38B) comportant :
- une face (40) de joint avant plane transversale verticale munie d'une demi-cavité (42) de moulage ;
- une face (46) d'assemblage verticale opposée, selon la direction longitudinale, à la face (40) de joint et courbée de manière convexe, la face (46) d'assemblage étant destinée à être logée dans une face (30) de réception complémentaire d'un support (26A, 26B) de moule associé ;
**caractérisé en ce qu'**en coupe transversale longitudinale, la face (46) d'assemblage présente une forme d'arc de cercle centré sur un axe (X) de référence, ledit axe (X) de référence étant décalé longitudinalement vers l'avant par rapport à la face (40) de joint.

2. Demi-moule (38A, 38B) selon la revendication précédente, **caractérisé en ce que** la face (46) d'assemblage présente, en coupe transversale longitudinale :
- une corde (C) transversale s'étendant dans le plan de la face (40) de joint en reliant les extrémités transversales libres de la face (46) d'assemblage ; et
- une bissectrice (B) longitudinale passant par le centre (O) de la corde (C) et de longueur inférieure à la moitié de celle de la corde (C),
- un axe (O) vertical central du demi-moule (38A, 38B) passant par le croisement entre la corde (C) et la bissectrice (B) ;
- l'axe (X) de référence étant agencé dans un plan comportant la bissectrice (B).

3. Demi-moule (38A, 38B) selon la revendication précédente, **caractérisé en ce que** la face (46) d'assemblage comporte plusieurs tronçons (46A, 46B, 46C, 46D, 46E, 46F) verticaux présentant la forme d'un secteur de cylindre centré sur l'axe (X) de référence, et **en ce que** les axes (X) de références de chaque tronçon (46A, 46B, 46C, 46D, 46E, 46F) de face (46) d'assemblage sont coaxiaux entre eux.

4. Demi-moule (38A, 38B) selon l'une quelconque des revendications 1 à 3, **caractérisé en ce qu'**il est réalisé en deux parties :
- une coquille (66) interne qui est délimitée longitudinalement une face avant formant la face (40) de joint du demi-moule (38A, 38B) et par une face arrière, opposée à la face (40) de joint, et formant une face (70) de montage de forme convexe ;
- un porte-coquille (68) externe qui est délimité longitudinalement par une face (72) de réception avant de forme complémentaire à celle de la face (70) de montage et dans laquelle la face (70) de montage de la coquille (66) est logée et par une face arrière opposée qui forme la face (46) d'assemblage du demi-moule (38A, 38B).

5. Demi-moule (38A, 38B) selon la revendication précédente, **caractérisé en ce qu'**en coupe transversale longitudinale, la face (70) de montage de la coquille (66) présente une forme d'arc de cercle centré sur un axe (Z) de référence.

6. Demi-moule (38A, 38B) selon la revendication précédente, **caractérisé en ce que** l'axe (Z) de référence de la face (70) de montage est coaxial à l'axe (O) central inclus dans le plan de la face (40) de joint.

7. Demi-moule (38A, 38B) selon la revendication 5, **caractérisé en ce que** l'axe (Z) de référence de la face (70) de montage est décalé longitudinalement vers l'avant par rapport à la face (40) de joint.

8. Demi-moule (38A, 38B) selon la revendication précédente, **caractérisé en ce que** la face (70) de montage de la coquille (66) comporte plusieurs tronçons verticaux présentant la forme d'un secteur de cylindre centré sur l'axe (Z) de référence de la face (70) de montage ; **en ce que** l'axe (Z) de référence est agencé dans un plan comportant la bissectrice (B) longitudinale ; et **en ce que** les axes (Z) de références de chaque tronçon de face (70) de montage sont coaxiaux entre eux.

9. Demi-moule (38A, 38B) selon l'une quelconque des revendications 6 ou 7 prise en combinaison la revendication 3, **caractérisé en ce que** les axes (Z) de référence des tronçons de face (70) de montage et les axes (X) de référence des tronçons de face d'assemblage sont tous coaxiaux à un axe (X) commun.

10. Ensemble (34) de moulage comportant une paire de demi-moules (38A, 38B) réalisés selon l'une quelconque des revendications précédente, **caractérisé en ce que** les deux demi-moule (38A, 38B) de la paire comportent deux demi-cavités (42) complémentaires pour former une cavité conforme au récipient final à obtenir lorsque les deux demi-moules (38A, 38B) occupent une position jointe dans laquelle leur deux faces (40) de joint sont plaquées longitudinalement l'une contre l'autre.

11. Ensemble (34) de moulage selon la revendication précédente, **caractérisé en ce que** les deux demi-moules (38A, 38B) présentent une structure sensiblement identique par symétrie par rapport à un plan (44) de joint passant par les faces (40) de joint en position jointe des deux demi-moules (38A, 38B).

12. Unité (24) de moulage comportant deux supports (26A, 26B) de moule dont chacun est destiné à recevoir l'un des demi-moules (38A, 38B) d'un ensemble (34) de moulage réalisé selon la revendication précédente, les supports (26A, 26B) de moule étant montés mobiles l'un par rapport à l'autre entre une position ouverte, dans laquelle les faces (40) de joint des demi-moule (38A, 38B) sont écartés, et une position fermée dans laquelle les demi-moules (38A, 38B) occupent leur position jointe, **caractérisé en ce que** chaque support (26A, 26B) de moule comporte une face (30) de réception de forme complémentaire de la face (46) d'assemblage du demi-moule (38A, 38B) associé.

13. Unité (24) de moulage selon la revendication précédente, **caractérisé en ce que** les deux supports (26A, 26B) de moule sont montés pivotant l'un par rapport à l'autre autour d'un axe (A) de charnière vertical, le plan (44) de joint des demi-moules (38A, 38B) passant par l'axe (A) de charnière.

14. Installation (50) de formage de récipient thermoplastique par formage, et notamment par soufflage ou étirage soufflage, comportant une roue (52) principale montée tournante autour d'un axe (Y) central de rotation et comportant à sa périphérie une pluralité d'unité (24) de moulage réalisées selon la revendication précédente, **caractérisé en ce que** le plan (44) de joint des demi-moules (38A, 38B) de chaque unité (24) de moulage passe par l'axe (Y) central de rotation de la roue (52) principale.

15. Procédé d'usinage des faces externes d'une paire d'éléments de moulage d'un ensemble (34) de moulage selon la revendication 11, les faces externes étant prises parmi les faces (70) de montage des coquilles (66) ou les faces (46) d'assemblage des porte-coquilles (68) ou les faces (46) d'assemblage des demi-moules (38A, 38B) monobloc, les éléments de moulage étant obtenus par fonderie, **caractérisé en ce que** les éléments de moulage de la paire sont montés sur une entretoise (60) d'usinage montée à rotation sur un tour (54) d'usinage autour d'un axe d'usinage, de manière que les axes (X, Z) de référence des tronçons à usiner soient en coïncidence avec l'axe d'usinage.

## Patentansprüche

1. Halbform (38A, 38B) für die Formung von Behältern aus thermoplastischem Material mit vertikaler Orientierungsachse, insbesondere durch Blasen oder Streckblasen, wobei die Halbform (38A, 38B) Folgendes aufweist:
- eine vertikale quer verlaufende ebene vordere Fügefläche (40), die mit einer Formungs-Halbkavität (42) versehen ist;
- eine vertikale Verbindungsfläche (46), die der Fügefläche (40) in der Längsrichtung gegenüberliegt und konvex gekrümmt ist, wobei die Verbindungsfläche (46) dazu bestimmt ist, in einer komplementären Aufnahmefläche (30) eines zugehörigen Formträgers (26A, 26B) untergebracht zu sein;
**dadurch gekennzeichnet, dass** im Querschnitt in Längsrichtung die Verbindungsfläche (46) eine Form eines Kreisbogens aufweist, der auf einer Referenzachse (X) zentriert ist, wobei die Referenzachse (X) bezogen auf die Fügefläche (40) in Längsrichtung nach vorne versetzt ist.

2. Halbform (38A, 38B) nach dem vorhergehenden Anspruch, **dadurch gekennzeichnet, dass** die Verbindungsfläche (46) im Querschnitt in Längsrichtung Folgendes aufweist:
- eine Sehne (C) in Querrichtung, die sich in der Ebene der Fügefläche (40) erstreckt wobei sie die freien Querenden der Verbindungsfläche (46) verbindet; und
- eine Winkelhalbierende (B) in Längsrichtung, die durch den Mittelpunkt (O) der Sehne (C) verläuft und eine Länge kleiner als die Hälfte jener der Sehne (C) aufweist,
- eine mittlere vertikale Achse (O) der Halbform (38A, 38B), die durch die Kreuzung zwischen der Sehne (C) und der Winkelhalbierenden (B) verläuft;
- wobei die Referenzachse (X) in einer Ebene angeordnet ist, die die Winkelhalbierende (B) enthält.

3. Halbform (38A, 38B) nach dem vorhergehenden Anspruch, **dadurch gekennzeichnet, dass** die Verbindungsfläche (46) mehrere vertikale Abschnitte (46A, 46B, 46C, 46D, 46E, 46F) aufweist, die die Form eines Sektors eines Zylinders aufweisen, der auf der Referenzachse (X) zentriert ist, und dadurch, dass die Referenzachsen (X) jedes Abschnitts (46A, 46B, 46C, 46D, 46E, 46F) der Verbindungsfläche (46) zueinander koaxial verlaufen.

4. Halbform (38A, 38B) nach einem der Ansprüche 1 bis 3, **dadurch gekennzeichnet, dass** sie aus zwei Teilen hergestellt ist:
- einer Innenschale (66), die in Längsrichtung von einer vorderen Fläche, die die Fügefläche (40) der Halbform (38A, 38B) bildet, und von einer hinteren Fläche, die der Fügefläche (40) gegenüberliegt und eine konvex geformte Montagefläche (70) bildet, begrenzt ist;
- einem äußeren Schalenträger (68), der in Längsrichtung von einer vorderen Aufnahmefläche (72) mit einer Form, die zu jener der Montagefläche (70) komplementär ist, und in der die Montagefläche (70) der Schale (66) aufgenommen ist, und von einer gegenüberliegenden hinteren Fläche, die die Verbindungsfläche (46) der Halbform (38A, 38B) bildet, begrenzt ist.

5. Halbform (38A, 38B) nach dem vorhergehenden Anspruch, **dadurch gekennzeichnet, dass** im Querschnitt in Längsrichtung die Montagefläche (70) der Schale (66) eine Form eines Kreisbogens aufweist, der auf einer Referenzachse (Z) zentriert ist.

6. Halbform (38A, 38B) nach dem vorhergehenden Anspruch, **dadurch gekennzeichnet, dass** die Referenzachse (Z) der Montagefläche (70) koaxial zur Mittelachse (O) verläuft, die in der Ebene der Fügefläche (40) liegt.

7. Halbform (38A, 38B) nach Anspruch 5, **dadurch gekennzeichnet, dass** die Referenzachse (Z) der Montagefläche (70) bezogen auf die Fügefläche (40) in Längsrichtung nach vorne versetzt ist.

8. Halbform (38A, 38B) nach dem vorhergehenden Anspruch, **dadurch gekennzeichnet, dass** die Montagefläche (70) der Schale (66) mehrere vertikale Abschnitte aufweist, die die Form eines Sektors eines Zylinders aufweisen, der auf der Referenzachse (Z) der Montagefläche (70) zentriert ist; dadurch, dass die Referenzachse (Z) in einer Ebene angeordnet ist, die die Winkelhalbierende (B) in Längsrichtung enthält; und dadurch, dass die Referenzachsen (Z) jedes Abschnitts der Montagefläche (70) koaxial zueinander verlaufen.

9. Halbform (38A, 38B) nach einem der Ansprüche 6 oder 7 in Kombination mit Anspruch 3, **dadurch gekennzeichnet, dass** die Referenzachsen (Z) der Abschnitte der Montagefläche (70) und die Referenzachsen (X) der Abschnitte der Verbindungsfläche alle koaxial zu einer gemeinsamen Achse (X) verlaufen.

10. Formungsanordnung (34) aufweisend ein Paar Halbformen (38A, 38B), die nach einem der vorhergehenden Ansprüche hergestellt sind, **dadurch gekennzeichnet, dass** die zwei Halbformen (38A, 38B) des Paars zwei komplementäre Halbkavitäten (42) aufweisen, um eine Kavität zu bilden, die dem zu erhaltenen finalen Behälter entspricht, wenn die zwei Halbformen (38A, 38B) eine zusammengefügte Position einnehmen, in der ihre zwei Fügeflächen (40) in Längsrichtung aneinander gedrückt sind.

11. Formungsanordnung (34) nach dem vorhergehenden Anspruch, **dadurch gekennzeichnet, dass** die zwei Halbformen (38A, 38B) eine Struktur aufweisen, die durch Symmetrie zu einer Trennebene (44), die durch die Fügeflächen (40) in zusammengefügter Position der zwei Halbformen (38A, 38B) verläuft, im Wesentlichen identisch ist.

12. Formungseinheit (24) aufweisend zwei Formträger (26A, 26B), von denen jeder dazu bestimmt ist, eine der Halbformen (38A, 38B) einer Formungsanordnung (34) aufzunehmen, die nach dem vorhergehenden Anspruch hergestellt ist, wobei die Formträger (26A, 26B) zwischen einer offenen Position, in der die Fügeflächen (40) der Halbform (38A, 38B) voneinander entfernt sind, und einer geschlossenen Position, in der die Halbformen (38A, 38B) ihre zusammengefügte Position einnehmen, beweglich gelagert sind, **dadurch gekennzeichnet, dass** jeder Formträger (26A, 26B) eine Aufnahmefläche (30) mit einer Form, die zur Verbindungsfläche (46) der zugehörigen Halbform (38A, 38B) komplementär ist, aufweist.

13. Formungseinheit (24) nach dem vorhergehenden Anspruch, **dadurch gekennzeichnet, dass** die zwei Formträger (26A, 26B) bezogen aufeinander um eine vertikale Scharnierachse (A) herum schwenkbar gelagert sind, wobei die Trennebene (44) der Halbformen (38A, 38B) durch die Scharnierachse (A) verläuft.

14. Anlage (50) zur Formung eines thermoplastischen Behälters durch Formung, und insbesondere durch Blasen oder Streckblasen, aufweisend ein Hauptrad (52), das um eine Mitteldrehachse (Y) herum drehbar gelagert ist und an seinem Rand eine Mehrzahl von Formungseinheiten (24) aufweist, die nach dem vorhergehenden Anspruch hergestellt sind, **dadurch gekennzeichnet, dass** die Trennebene (44) der Halbformen (38A, 38B) jeder Formungseinheit (24) durch die Mitteldrehachse (Y) des Hauptrads (52) verläuft.

15. Verfahren zur Bearbeitung der Außenflächen eines Paars von Formungselementen einer Formungsanordnung (34) nach Anspruch 11, wobei die Außenflächen aus den Montageflächen (70) der Schalen (66) oder den Verbindungsflächen (46) der Schalenträger (68) oder den Verbindungsflächen (46) der einstückigen Halbformen (38A, 38B) gewählt werden, wobei die Formungselemente durch Gießen erhalten sind, **dadurch gekennzeichnet, dass** die Formungselemente des Paars auf einem Bearbeitungs-Abstandshalter (60) angebracht sind, der auf einer Bearbeitungsmaschine (54) um eine Bearbeitungsachse herum drehbar gelagert ist, so dass die Referenzachsen (X, Z) der zu bearbeitenden Abschnitte mit der Bearbeitungsachse zusammenfallen.

## Claims

1. Half-mould (38A, 38B) for moulding containers made of thermoplastic material and having an axis of vertical orientation, in particular by blow moulding or stretch blow moulding, the half-mould (38A, 38B) having:
- a front planar vertical transverse parting face (40) provided with a moulding half-cavity (42);
- a vertical assembly face (46), which is opposite to the parting face (40) in the longitudinal direction and is convexly curved, the assembly face (46) being intended to be accommodated in a complementary receiving face (30) of an associated mould support (26A, 26B);
**characterized in that**, in longitudinal cross section, the assembly face (46) has the shape of a circular arc centred on a reference axis (X), said reference axis (X) being offset longitudinally forwards relative to the parting face (40).

2. Half-mould (38A, 38B) according to the preceding claim, **characterized in that** the assembly face (46) has, in longitudinal cross section:
- a transverse chord (C) extending in the plane of the parting face (40) and linking the free transverse ends of the assembly face (46); and
- a longitudinal bisector (B) passing through the centre (O) of the chord (C) and of a length less than half that of the chord (C),
- a central vertical axis (O) of the half-mould (38A, 38B) passing through the intersection between the chord (C) and the bisector (B);
- the reference axis (X) being arranged in a plane which includes the bisector (B).

3. Half-mould (38A, 38B) according to the preceding claim, **characterized in that** the assembly face (46) has multiple vertical sections (46A, 46B, 46C, 46D, 46E, 46F) having the shape of a sector of a cylinder centred on the reference axis (X), and **in that** the reference axes (X) of each section (46A, 46B, 46C, 46D, 46E, 46F) of assembly face (46) are coaxial to one another.

4. Half-mould (38A, 38B) according to any one of Claims 1 to 3, **characterized in that** it is made in two parts:
- an internal shell (66), which is longitudinally delimited by a front face forming the parting face (40) of the half-mould (38A, 38B) and by a rear face, which is opposite to the parting face (40) and forms a mounting face (70) with a convex shape;
- an external shell holder (68), which is delimited longitudinally by a front receiving face (72) with a complementary shape to that of the mounting face (70) and in which the mounting face (70) of the shell (66) is accommodated and by an opposite rear face, which forms the assembly face (46) of the half-mould (38A, 38B).

5. Half-mould (38A, 38B) according to the preceding claim, **characterized in that**, in longitudinal cross section, the mounting face (70) of the shell (66) has the shape of a circular arc centred on a reference axis (Z).

6. Half-mould (38A, 38B) according to the preceding claim, **characterized in that** the reference axis (Z) of the mounting face (70) is coaxial to the central axis (O) included in the plane of the parting face (40).

7. Half-mould (38A, 38B) according to Claim 5, **characterized in that** the reference axis (Z) of the mounting face (70) is offset longitudinally forwards relative to the parting face (40).

8. Half-mould (38A, 38B) according to the preceding claim, **characterized in that** the mounting face (70) of the shell (66) has multiple vertical sections having the shape of a sector of a cylinder centred on the reference axis (Z) of the mounting face (70); **in that** the reference axis (Z) is arranged in a plane which includes the longitudinal bisector (B); and **in that** the reference axes (Z) of each section of mounting face (70) are coaxial to one another.

9. Half-mould (38A, 38B) according to either one of Claims 6 and 7 taken in combination with Claim 3, **characterized in that** the reference axes (Z) of the sections of mounting face (70) and the reference axes (X) of the sections of assembly face are all coaxial to a common axis (X).

10. Moulding assembly (34) having a pair of half-moulds (38A, 38B) realized according to any one of the preceding claims, **characterized in that** the two half-moulds (38A, 38B) of the pair have two complementary half-cavities (42) in order to form a cavity conforming to the final container to be obtained when the two half-moulds (38A, 38B) occupy a joined position in which their two parting faces (40) are pressed longitudinally one against the other.

11. Moulding assembly (34) according to the preceding claim, **characterized in that** the two half-moulds (38A, 38B) have a structure that is substantially identical by symmetry relative to a parting plane (44) passing through the parting faces (40) in the joined position of the two half-moulds (38A, 38B).

12. Moulding unit (24) having two mould supports (26A, 26B), each of which is intended to receive one of the half-moulds (38A, 38B) of a moulding assembly (34) realized according to the preceding claim, the mould supports (26A, 26B) being mounted so as to be movable relative to one another between an open position, in which the parting faces (40) of the half-moulds (38A, 38B) are parted, and a closed position, in which the half-moulds (38A, 38B) occupy their joined position, **characterized in that** each mould support (26A, 26B) has a receiving face (30) with a complementary shape to the assembly face (46) of the associated half-mould (38A, 38B) .

13. Moulding unit (24) according to the preceding claim, **characterized in that** the two mould supports (26A, 26B) are mounted so as to be pivotable relative to one another about a vertical hinge axis (A), the parting plane (44) of the half-moulds (38A, 38B) passing through the hinge axis (A).

14. Installation (50) for moulding thermoplastic containers by moulding, and in particular by blow moulding or stretch blow moulding, comprising a main wheel (52) mounted so as to be rotatable about a central axis (Y) of rotation and having, at its periphery, a plurality of moulding units (24) realized according to the preceding claim, **characterized in that** the parting plane (44) of the half-moulds (38A, 38B) of each moulding unit (24) passes through the central axis (Y) of rotation of the main wheel (52).

15. Method for machining the external faces of a pair of moulding elements of a moulding assembly (34) according to Claim 11, the external faces being chosen from among the mounting faces (70) of the shells (66) or the assembly faces (46) of the shell holders (68) or the assembly faces (46) of the single-piece half-moulds (38A, 38B), the moulding elements being obtained by casting, **characterized in that** the moulding elements of the pair are mounted on a machining spacer (60) mounted so that it can rotate on a lathe (54) about a machining axis, such that the reference axes (X, Z) of the sections to be machined are in coincidence with the machining axis.
